(19) Europäisches Patentamt
European Patent Office
Office européen des brevets

(11) Publication number: 0 198 520 A2

# (12) EUROPEAN PATENT APPLICATION

(21) Application number: 86200288.8

(22) Date of filing: 25.02.86

(51) Int. Cl.[4]: C08L 101/08 , //A01N25/10,(C08L101/08,97:0-0)

(30) Priority: 26.02.85 NL 8500539

(43) Date of publication of application: 22.10.86 Bulletin 86/43

(84) Designated Contracting States: AT BE CH DE FR GB IT LI LU NL SE

(71) Applicant: NEDERLANDSE CENTRALE ORGANISATIE VOOR TOEGEPAST-NATUURWETENSCHAPPELIJK ONDERZOEK
Juliana van Stolberglaan 148
NL-2595 CL The Hague(NL)

(72) Inventor: Tinnemans, Aloysius H.A.
Rijn 36
NL-5751 TZ Deurne(NL)
Inventor: Huizer, Leendert
Carolinenberg 13
NL-2716 EP Zoetermeer(NL)

(74) Representative: van der Beek, George Frans et al
Nederlandsch Octrooibureau Johan de Wittlaan 15 P.O. Box 29720
NL-2502 LS 's-Gravenhage(NL)

## (54) Swellable polymer blends, method for the preparation of such polymer blends and also products prepared on the basis of such polymer blends.

(57) Swellable polymer blends suitable for the controlled release of for instance pesticides and comprising one or more polymers having anhydride groups as component (a) like polystyrene maleic anhydride and one or more polymers having groups which can interact with hydrogen atoms as component (b), in which blend the components (a) and (b) are linked to each other as a result of complete or partial hydrolysis of component (a) via hydrogen bonds. For instance ecologically acceptable swellable polymer blends are obtained if chemically modified lignin is used partly or completely as component (b). On the other hand swellable polymer blends having an increased flexibility are obtained if component (b) is at least partly based on polyethene vinyl acetate whereas in blends having an improved elongation at rupture and tensile strength component (b), is partially or completely based on a polyvinyl acetate/vinyllaurate copolymer or polylactic acid.

EP 0 198 520 A2

# Swellable polymer blends, method for the preparation of such polymer blends and also products prepared on the basis of such polymer blends.

The invention relates to polymer blends which comprise one or more high-molecular polymers having anhydride groups as component (a) and one or more high-molecular polymers having groups which can interact with hydrogen atoms as component (b), in which blend the components (a) and (b) are linked to each other as a result of complete or partial protolysis of component (a) via hydrogen bridges.

Such polymer blends are known from the Dutch Patent Application 79.08799. According to this literature reference component (a) is, for example, formed by one or more high-molecular copolymers of alkenic unsaturated monomers, preferably styrene and maleic anhydride and component (b) by polymers with ester groups such as polyvinyl acetate, a copolymer of ethene and vinyl acetate, polyacrylate and polymethacrylate. In general the components (a) and (b) each have a molecular weight of at least 10,000. Such polymer blends may, for example, be prepared by first preparing a solution of component (a) in an organic solvent to which solution component (b) is subsequently added, the extant component (a) in the dissolved stage being completely or partially protolysed, before or after the addition of component (b), under the influence of protolysing agents such as water, after which the organic solvent is removed. Examples of usable polymer blends are copolymers of styrene and maleic anhydride together with polyvinyl acetate in weight ratios from 10:90 to 70:30, preferably 30:70 to 50:50.

Such polymers can be used in applications in which the blends release on contact with water the active substance embodied in the blend such as a pesticide or herbicide. Specifically, on contact with water the polymer blends swell up and the active agent embodied in the polymer blend is released to the environment. The swelling is reversible. If the swollen polymer blend is no longer in contact with water, the swelling, and consequently the release of the active agent, decreases. Both the rate of the swelling and the degree of the swelling have an influence on the rate of release of the active agent, as a result of which the release thereof may be controlled. The rate of release is also dependent on the shape and the size of the particles. Usually the polymer blend with the active agent embodied therein is used in the form of granules, granulates, pills, fibres, powders and the like.

More in particular, it may be remarked with regard to the polymer components (a) and (b), which form the polymer blend, that they should fulfil a number of requirements. Firstly, the polymers should be soluble in the same solvent. Secondly, there should be a strong association between the polymers concerned, which can be achieved by dipole interactions or polar bonds, hydrogen bonds and polarizability. For example, a stable polymer blend can be formed, on the one hand, from partially hydrolysed copolymers of styrene and maleic anhydride (PSMA) with polyvinyl acetate (PVAc) in view of the fact that both polymers are soluble in acetone or butanone and a strong mutual interaction is present because of the hydrogen bonds which interaction, however, does not lead to coacervation. In addition, the polymer blends should have a structural homogeneity, in which respect the swelling behaviour in water is a good indication.

An important disadvantage of the polymer blends known from the Dutch Patent Application 79.08799 in, for example, systems for controlled release of, for example, herbicides and pesticides consists in the fact that the known blends are based on non-natural polymers which are often subject to a slower breakdown in the environment and may therefore be ecologically damaging. This applies in particular if such polymer blends are used in systems for "controlled release" on a large scale in, inter alia, agriculture.

Ecologically harmless polymers have therefore been sought, preferably modified natural products, which may be used in polymer blends having the abovementioned beneficial "controlled release" properties and, in addition, in view of the possibilities of large-scale use in, inter alia, agriculture have a low cost price.

Surprisingly, it has been found that O-alkylated lignin can be used as component (b) in the polymer blends according to the Dutch Patent Application 79.08799. In this connection reference is made, inter alia, to the passage on page 3, lines 29-35, of the Dutch Patent Application 79.08799 in which it is reported that it is in general not possible or barely possible to prepare such homogeneous polymer blends.

Since lignin is a waste product in, inter alia, wood processing, the use of such a product as a starting material has the advantage of a low cost price. Furthermore, products derived from lignin are particularly attractive for use in systems for controlled release on a large scale in agriculture

because of the biodegradability of lignin by microorganisms. In addition, lignin has beneficial effects on humus and soil processes dependent thereof.

More particularly, lignin is a crosslinked polymer which is made up of a few hundred phenylpropane monomers depending on the type of wood. In this connection it is pointed out that, for example, "softwood lignin" is essentially made up of guaiacylpropane segments and "hardwood lignin" is essentially made up of syringylpropane segments.

The isolation of lignin can, for example, take place by a method in which the wood is selectively digested and the lignin is taken up in a solvent from which it can be precipitated. In this method both organic reagents (organosolv lignin) and also inorganic reagents (alkali-lignin and lignosulphonates) can be used. The most important lignin products are alkali-lignin and lignosulphonates.

More particularly, alkali-lignin is obtained in solution by treating wood with an NaOH solution under pressure. During the production process the alkali losses are made up with soda ("soda process") or by adding $Na_2SO_4$ which is reduced to $Na_2S$ in the production process. Together with NaOH, this $Na_2S$ is the active reagent in the digestion process ("sulphate process"). Because of the better yield of cellulose pulp (stronger pulp) this process is called the "kraft process". The lignin precipitates under neutral or acid conditions. The kraft lignins are in general soluble in polar solvents.

The lignosulphates are obtained in solution during the delignification process with the aid of neutral or acidic (bi)sulphites ("sulphite process"). The separation of lignin from the wood is based on the sulphonation of lignin, accompanied by partial hydrolysis and depolymerization.

In the "kraft process" and the "sulphite process" it is primarily the cellulose pulp which matters. Hitherto the byproducts (lignin and hydrolysed sugars) have for the greatest part been burnt to obtain energy for the recovery of inorganic chemicals.

The most important structural elements in lignin are shown in the figure below.

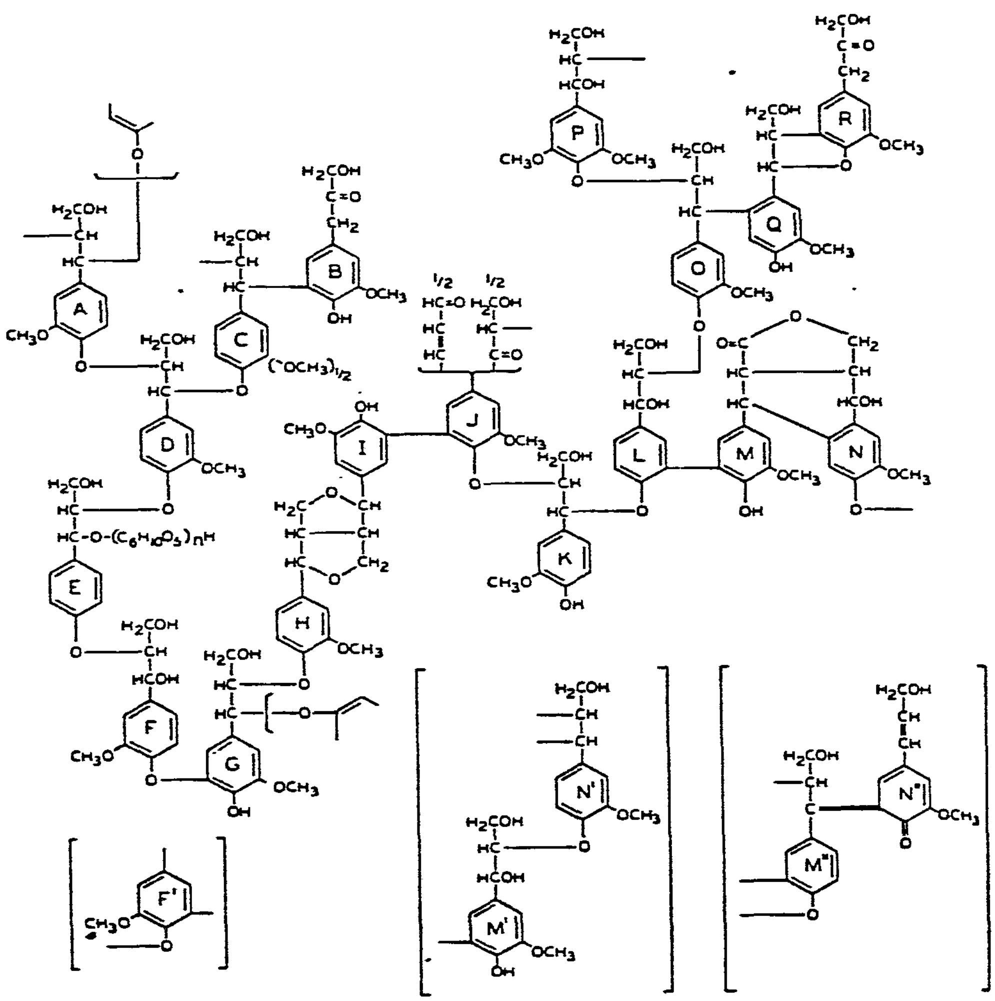

As is evident from the above figure, lignin has a large number of active or functional groups such as dialkyl, diaryl and alkylaryl ethers, aldehydes etc.. Lignin can be modified because of these active groups. The modification according to the invention relates to the formation of ethers by reaction with for instance alkylaryl halides, alcohols and, more particularly, with acrylonitrile, chloroacetic acid, epichlorohydrin, chloroformates and alkyl chlorides.

The suitability of the use of modified lignin for application in polymer blends as known from the Dutch Patent Application 79.08799 is explained in more detail by reference to the examples below. More particularly, it is pointed out that various lignin products are used which have been modified by means of an ether group.

Example I

An alkaline kraft lignin product (Indulin AT from Westvaco Chem. Co., USA) is subjected to a pretreatment by suspending the lignin in water (2.5 kg/15 l). After stirring vigorously the lignin is collected by filtration under reduced pressure, dried in an oven with forced air circulation and subsquently dried over KOH under a reduced pressure to a constant weight. The product has a brown colour, a softening temperature of approximately 205°C and the following emperical formula $C_9H_{8.70}(OCH_3)_{0.8}$. - (The softening temperature has been determined by means of a Kofler bench).

Example II

Preparation of copolymers of styrene and maleic anhydride (PSMA).

The following substances were mixed sequentially in a vessel having a capacity of 50 l:

25 kg (39 l)of butanone, 3,120 g of styrene, 3,000 g of maleic anhydride and 7.5 g of azoisobutyronitrile (catalyst).

The vessel was provided with a heating jacket, stirring device, thermometer and a thermal fuse. The content of the vessel was heated while stirring continuously in accordancce with the scheme below.

-heat to 60°C, 1 hour

-constant at 60°C, 2 hours

-constant at 70°C, 1 hour

-constant at 80°C, 3 hours.

The molecular weight, determined by gel permeation chromatography, of the product was 350,000. The maleic anhydride groups were partially protolysed (approximately 35%).

Example III

An O-alkylated Indulin AT derivative was prepared by reacting the potassium derivative of Indulin AT (prepared by addition of Indulin AT to an anhydrous potassium carbonate solution in acetone) with an alkyl bromide having the formula $BrCH_2COOC_2H_5$.

More particularly, 0.1 mol of anhydrous $K_2CO_3$ and 0.1 mol of ethyl bromoacetate were added sequentially to a solution of 15 g of Indulin AT in 100 ml of acetone. The solvent was dried above anhydrous $K_2CO_3$ before use thereof. After 3-8 hours at reflux temperature the mixture was poured out into 1,000 ml of vigorously stirred ice water. The crude product was filtered off and subsequently washed with distilled water and twice with diethyl ether. After drying to constant weight under reduced pressure over KOH the O-alkylated lignin derivative in 100ml of acetone was added dropwise to 1,000 ml of vigorously stirred petroleum ether - (boiling point 60-80°C). The precipitated lignin derivative was obtained as a fine beige powder and dried under reduced pressure.

Yield 17 g.

Analysis: 61.98% C; 6.01% H; 17.80% $OCH_3$; 4.65% OH and 2.38% ash.

Example IV

For the preparation of a number of specific O-alkylated lignin derivatives use was made of the following compounds: $Br(CH_2)_nCOOCH_2CH_2OCH_2CH_2OCH_3$, where n represents the values 1, 5 and 10. These compounds were prepared as follows.

In a three-necked flask having a capacity of 500 ml which was provided with a magnetic stirrer and a modified Dean and Stark device which was in turn provided with a reflux condenser at its upper end, a solution of 0.5 mol of a suitable ω-bromine-substituted aliphatic acid, 0.525 mol (i.e. 5% excess) of the monomethyl ether of diethylene glycol (Fluka) and 0.025 mol (5 mol%) of p-toluenesulphonic acid and 500 ml of absolute toluene were boiled for 3-8 hours, in which process the separation of water was complete. After cooling 150 ml of diethyl ether were added and the solution obtained was sequentially washed with water, a 10% w/w solution of sodium hydrogen-carbonate and water. After drying the organic phase over magnesium sulphate the residue was concentrated to a small volume and then fractionally distilled under reduced pressure. The physical data are listed in Table A.

Table A

Physical data of $Br(CH_2)_n\ COOCH_2CH_2OCH_2CH_2OCH_3$

| Compound | Yield (%) | Boiling point (°C/mm Hg) | $n_D^{20}$ | NMR ($CDCl_3$), chemical shifts ( $\delta$ ppm) |
|---|---|---|---|---|
| 1, n = 1 | 72 | 82-85/0.04 | 1.4667 | 3.38 (s, $OCH_3$), 3.47-3.73 (m, $O(CH_2)_2O$), 3.66-3.78 (m, $COOCH_2CH_2$), 3.87 (s, $BrCH_2$), 4.29-4.39 (m, $COOCH_2$) |
| 2, n = 5 | 83.6 | 130-133/0.05 | 1.4671 | 1.27-2.03 (m, $C(CH_2)_3C$), 2.36 (bt, $CH_2COO$), 3.38 (s, $OCH_3$), 3.41 (t, $BrCH_2$), 3.47-3.73 (m, $O(CH_2)_2O$), 3.36-3.75 (m, $COOCH_2CH_2$), 4.16-4.29 (m, $COOCH_2$) |
| 3, n = 10 | 86.4 | 158-164/0.04 | 1.4667 | 1.15-2.05 (m, $C(CH_2)_8C$), 2.33 (bt $CH_2COO$), 3.38 (s, $OCH_3$), 3.41 (t, $BrCH_2$), 3.47-3.73 (m, $O(CH_2)_2O$), 4.18-4.29 (m, $COOCH_2$) |

With the help of the compounds 1-3 listed in the above Table H the lignin derivatives below were prepared:

$$\text{Lignin-OH} + Br(CH_2)_nCOOCH_2CH_2OCH_2CH_2OCH_3 \xrightarrow[\text{acetone}]{K_2CO_3}$$

$$\text{Lignin-O}(CH_2)_nCOOCH_2CH_2OCH_2CH_2OCH_3$$

where n represents the value 1, 5 or 10.

The O-alkylated lignin derivative in which n represents the value 1 was prepared from Indulin AT and the corresponding ω-bromo component. The crude product was obtained by precipitation with water and was subsequently dried and purified by adding it dropwise to 500 ml of vigorously stirred petroleum ether (boiling point: 60-80°C).

Yield of $L\text{-}OCH_2COOCH_2CH_2OCH_2CHOCH_3$ is 16.9 g.

Softening point: approx. 100°C.

Analysis: 60.61% C, 6.07% H, 16.40% $OCH_3$, 4.93% OH and 1.43% ash.

The O-alkylated lignin derivative in which n has the value 5 was prepared from Indulin AT and the corresponding ω-bromo compound. In place of acetone 200 ml of water were used as solvent to which 1.5 g NaI were added. The crude product which was obtained by precipitation with water was treated with 200 ml of 1 N acetic acid, filtered, washed with water and then dried. The purification took place in the above manner. Yield: 16.8 g. Softening point: approx. 60°C. Analysis: 63.34% C, 7.00% H, 15.05% $OCH_3$, 5.42% OH and 1.40% ash.

The O-alkylated lignin derivative in which n has the value 10 was prepared from Indulin AT and the corresponding ω-bromo compound in the manner as described for the O-alkylated lignin derivative for which n has the value 5. Yield: 22.15 g. Softening point: room temperature.

Analysis: 65.33% C, 8.03% H, 12.80% $OCH_3$, 2.84% OH and 1.59% ash.

Example V

The solubility of lignin derivatives according to Example IV in the solvents: acetone (AC), butanone (MEK), dimethyl sulphoxide (DMSO), tetrahydrofuran (THF), and ethyl acetate (EAC) was investigated. The data are listed in Table B.

Table B

| Compound[a)] according to | AC | MEK | DMSO | THF | EAC |
|---|---|---|---|---|---|
| | Solubility in | | | | |
| Example IV, n=1 | 0 | 0 | 0 | 0 | - |
| Example IV, n=5 | + | + | + | + | 0 |
| Example IV, n=10 | 0 | Δ | 0 | 0 | 0 |

+ completely soluble

0 more than 50% soluble

Δ more than 10%, but less than 50% soluble

\- less than 10% soluble

a) 0.25 g of lignin derivative in 1.00 g of solvent.

Example VI

In view of the good solubility of the O-alkylated lignin derivative L-O $(CH_2)_5COCH_2CH_2OCH_2CH_2OCH_3$ mentioned

in Example IV in many types of solvent a polymer blend was prepared from this compound. For the preparation of the said blend a 20% w/w solution of the said compound in butanone was used. As further components PSMA and PVAc (Vinnapas UW 30, Wacker) were used. Data relating to these polymer blends are listed in Table C. For the determination of the swelling properties the obtained films were first activated in 1% w/w $NH_4OH$ for 10 minutes and then in distilled $H_2O$ for 24 hours.

Table C

Properties of a film of a mixture of PSMA, PVAc and the lignin derivative

Lignin-$O(CH_2)_5$-COO-$CH_2CH_2OCH_2CH_2OCH_3$

| Lignin derivative/ PSMA[a)]/PVAc[b)] ratio in % w/w | Mechanical properties | Swelling, water/blend w/w 1% w/w $NH_4OH$ | dist. $H_2O$ |
|---|---|---|---|
| 33/33/33 | flexible homogeneous, fairly strong | 10 | 45 |

(a) see Example II

(b) Vinnapas homopolymer UW 30; Wacker

In addition the polymer blends known from the Dutch Patent Application 79.08799 based, for example, on polyvinyl acetate (PVAc) and polystyrene maleic anhydride (PSMA) have the disadvantage that they are unsuitable for many types of

biomedical applications. For example, stomabags constructed in such blends are too crisp and blood bags based on these blends have inadequate flexibility.

It was found that the abovenamed disadvantages can be eliminated if ethene/vinyl acetate copolymers (EVA) are used as complete component (b) or as partial component (b) in the blends according to Dutch Patent Application 79.08799.

The EVA content in binary EVA/PSMA blends is, for example, at least 50% w/w and preferably 60-70% w/w.

The EVA content in ternary EVA/PVAc/PSMA blends is, for example, at most 45% w/w, preferably 15-30% w/w.

There follow below examples of polymer compounds based on EVA (ethene/vinyl acetate copolymer) as a binary blend with PSMA and as a ternary blend with PSMA and PVAc. These examples should not be interpreted as restrictive.

The blends below have been prepared on the basis of the materials below:

EVA: levapren 450, 452 and 500, characterized by a vinyl acetate content of 45, 45 and 50% w/w and a melt index of 4.8 and 4 dg/min (from Bayer).

PVAc: Mowilith M70 (Hoechst) and

PSMA: molar weight 350,000 and a degree of hydrolysis of 35% (see Example II).

From the three components mentioned above EVA/PSMA blends and also EVA/PSMA-PVAc blends are prepared. The three components are soluble in various organic solvents such as methyl ethyl ketone, cyclohexanone, tetrahydrofuran and dioxane. The blends can therefore be prepared in the manner known for these blends mentioned above. From the blends films were prepared by means of a so-called film iron. Using this the blend was spread out on a glass plate which was covered with a polyester film. The thickness of the film was 0.5 mm. After drying in air the films were removed from the polyester film after which strips of 14 x 50 mm were cut out of it. The swelling of these strips was measured by first allowing them to swell for 10 minutes in a 1% w/w $NH_4OH$ solution and subsequently, after rinsing well, allowing them to swell further in distilled water. The swelling was measured in the length and width direction and has been converted into a three-dimensional swelling for further processing.

In Figure 1 the swelling behaviour is shown of films of EVA-PSMA which have been prepared by pouring out the blends, dissolved in methyl ethyl ketone, on a polyester film. From the figure it follows that the composition of the blend is of great influence:

-with a low PSMA content (30% w/w) the swelling proceeds in two phases, a semi-stationary degree of swelling of approximately twice the original weight being reached after three days and a stationary degree of swelling of 8 to 10 times the original weight being reached after 11 days. These EVA-rich compositions are elastic and readily weldable.

-with a PSMA content of 50% w/w the swelling proceeds in the first instance similarly to the 30/70 compositions with which a higher semi-stationary swelling of one and a half can be achieved within 4 days. The second phase, however, does not occur for the 50/50 composition which contains low-molecular EVA, and shrinkage even occurs for the composition which contains high-molecular EVA. These compositions are much less elastic than the 70/30 compositions.

The swelling behaviour of ternary blends based on EVA-PVAc-PSMA films which were prepared in the usual manner is shown in Figures 2 and 3.

Figure 2 shows the behaviour of EVA 452/PVAc/PSMA blends. For the 15/55/30 and the 30/40/30 compositions this swelling behaviour is approximately the same, while the 45/25/30 composition swells to a considerably lesser extent.

From Figure 3 it is evident that the swelling behaviour of EVA 500/PVAc/PSMA blends is approximately the same for 15/55/30 and the 30/40/30 compositions, provided it is understood that the EVA-richer composition no longer swells after 17 hours while the EVA-poorer ones do. It is also evident from Figure 3 that the 45/25/30 composition swells least.

Comparison of the swelling characteristics of the EVA 452/PVAc/PSMA 30/40/30 composition - (Figure 2) with that of the EVA 452/PSMA (70/30) composition (Figure 1) indicates that polyvinyl acetate accelerated the swelling approximately 10 times. However, polyvinyl acetate, within the specified concentration range of EVA 452, has no influence on the swellability of the blend.

As a result of the increase in the EVA content the brittleness of the films decreases sharply, which offers a favourable prospect for many types of applications of these blends, for example in the biomedical field.

Finally, the disadvantages of the polymer blends known from the Dutch Patent Application 79.08799 based on PSMA (according to Example II) and PVAc with regard to many types of mechanical properties such as elongation at rupture, flexibility and tensile strength can be eliminated by using, inter alia, polyvinyl acetate/vinyl laurate - (PVAc-VL) or polylactic acid (PLA) in these blends.

Below there follow a number of examples relating to blends based, on the one hand, on PSMA and, on the other hand, on other components. These data are shown in the table below.

Tabel D

| PSMA % w/w | PVAc UW10 % w/w | PVAc UW30 % w/w | PVAc M70 % w/w | PVAc-VL B500-20VL % w/w | Swellability (w/w) $NH_4OH$ 10 min. | $H_2O$ (dis.) 24 hours |
|---|---|---|---|---|---|---|
| 30 | | 70 | | | 11 | 33 |
| 30 | 70 | | | | 15 | 62 |
| 30 | | | 70 | | 17 | 55 |
| 30 | | | 65 | 5 | 20 | 41 |
| 30 | | | 60 | 10 | 22 | 41 |
| 30 | | | 50 | 20 | 24 | 79 |
| 30 | | | 35 | 35 | 9 | 33 |
| 30 | | | | 70 | | 100 |
| 10 | | | | 90 | 2.7 | 5.8 |
| 20 | | | | 80 | 5.8 | 28 |
| 30 | | | | 70 | 9.3 | 41 |
| 40 | | | | 60 | 15.5 | 62 |
| 50 | | | | 50 | 22 | 94 |

The advantage of the blends, mentioned in Table D, having a PVAc-VL component is a higher elongation at rupture or a lower modulus of elasticity respectively, so that these blends are also much more pliant.

The use of polylactic acid (PLA) in such PSMA-PVAc blends offers a considerable improvement in the tensile strength, as is evident from the data included in Table E.

The compositions shown in Table E below have been prepared by pouring out 5% w/w solutions in 1,4-dioxane on to a polypropene film and evaporation of these solutions.

TABLE E

| Polylactic acid $M_v$ 100.000 | PSMA | PVAc UW30 | Thick-ness | Elonga-tion at break | Strength | Yielding |
|---|---|---|---|---|---|---|
| % w/w | % w/w | % w/w | micron | % | MN/m2 | |
| 0 | 20 | 80 | 130 | 400 | 1,9 | no |
| | | | 120 | 600 | 2.0 | no |
| 5 | 15 | 80 | 170 | 500 | 3.5 | no |
| 15 | 5 | 80 | 130 | 500 | 3,8 | no |
| | | | 120 | 500 | 4.1 | no |
| | | | 120 | 500 | 4.1 | no |

## Claims

1. Polymer blend comprising one or more high-molecular polymers having anhydride groups as component (a) and one or more high-molecular polymers having groups which can interact with hydrogen atoms as component (b), in which blend the components (a) and (b) are linked to each other as a result of complete or partial protolysis of component (a) via hydrogen bonds, characterized in that component (b) consists completely or partially of an O-alkylated lignin derivative.

2. Polymer blend according to Claim 1, characterized in that the lignin derivative has the formula lignin-$O(CH_2)_nCOOCH_2$-$CH_2$-$OCH_2CH_2OCH_3$, where n has the value 1-10.

3. Polymer blend according to Claim 2, characterized in that the lignin derivative has the formula lignin-$O(CH_2)_5COOCH_2$-$CH_2OCH_2CH_2OCH_3$.

4. Polymer blend according to Claims 1 and 3, characterized in that the blend is made up of the lignin derivative according to Claim 3, polystyrene maleic anhydride and polyvinyl acetate.

5. Polymer blend comprising one or more high-molecular polymers having anhydride groups as component (a) and one or more high-molecular polymers having groups which can interact with hydrogen atoms as component (b), in which blend the components (a) and (b) are linked to each other as a result of complete or partial protolysis of component (a) via hydrogen bonds and which blend has an increased flexibility, characterized in that component (b) consists completely or partially of polyethene vinyl acetate.

6. Blend according to Claim 5, characterized in that the blend is made up of polyethene vinyl acetate and polystyrene maleic anhydride.

7. Blend according to Claim 6, characterized in that the blend is made up of 60-70% w/w polyethene vinyl acetate and 40-30% w/w polystyrene maleic anhydride.

8. Blend according to Claim 5, characterized in that the blend is made up of polyethene vinyl acetate, polystyrene maleic anhydride and polyvinyl acetate.

9. Blend according to Claim 8, characterized in that the blend is made up of 15-30% w/w polyethene vinyl acetate, 40-55% w/w polyvinyl acetate and 25-35% w/w polystyrene maleic anhydride.

10. Polymer blend containing one or more high-molecular polymers having anhydride groups as component (a) and one or more high-molecular polymers having groups which can interact with hydrogen atoms as component (b), in which blend the components (a) and (b) are linked to each other as a result of complete or partial protolysis of component (a) via hydrogen bonds and which blend has an improved elongation at rupture and tensile strength, characterized in that component - (b) consists at least partially of a polyvinyl acetate/vinyl laurate copolymer or polylactic acid.

11. Polymer blend according to Claim 10, characterized in that the blend is made up of polystyrene maleic anhydride and polyvinyl acetate/vinyl laurate copolymer.
12. Polymer blend according to Claim 10, characterized in that the blend is made up of polystyrene maleic anhydride, polyvinyl acetate and polyvinyl acetate/vinyl laurate copolymer.
13. Polymer blend according to Claim 10, characterized in that the blend is made up of polystyrene maleic anhydride, polyvinyl acetate and polylactic acid.
14. Product based on a polymer blend according to one or more of the Claims 1-13.
15. Preparation with controlled release properties, an active substance either being present in the matrix of a blend according to one or more of Claims 1-13 or being encapsulated by a layer of a blend according to one or more of Claims 1-13 so that the active substance can be delivered in a controlled manner.

fig-1

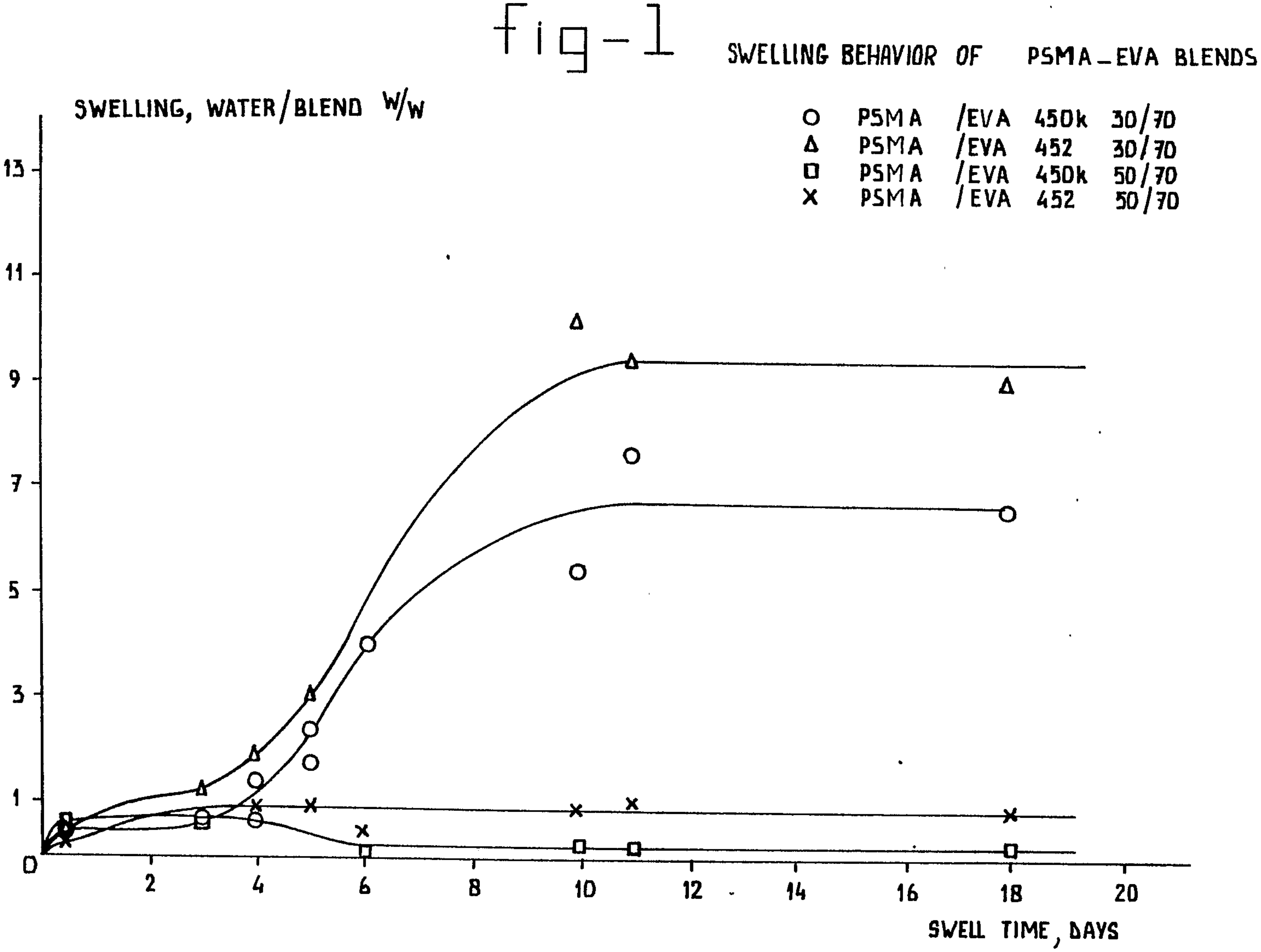
SWELLING BEHAVIOR OF PSMA–EVA BLENDS
SWELLING, WATER/BLEND W/W
○ PSMA /EVA 450k 30/70
Δ PSMA /EVA 452 30/70
□ PSMA /EVA 450k 50/70
X PSMA /EVA 452 50/70
SWELL TIME, DAYS
0
1
3
5
7
9
11
13
2
4
6
8
10
12
14
16
18
20

Fig-2

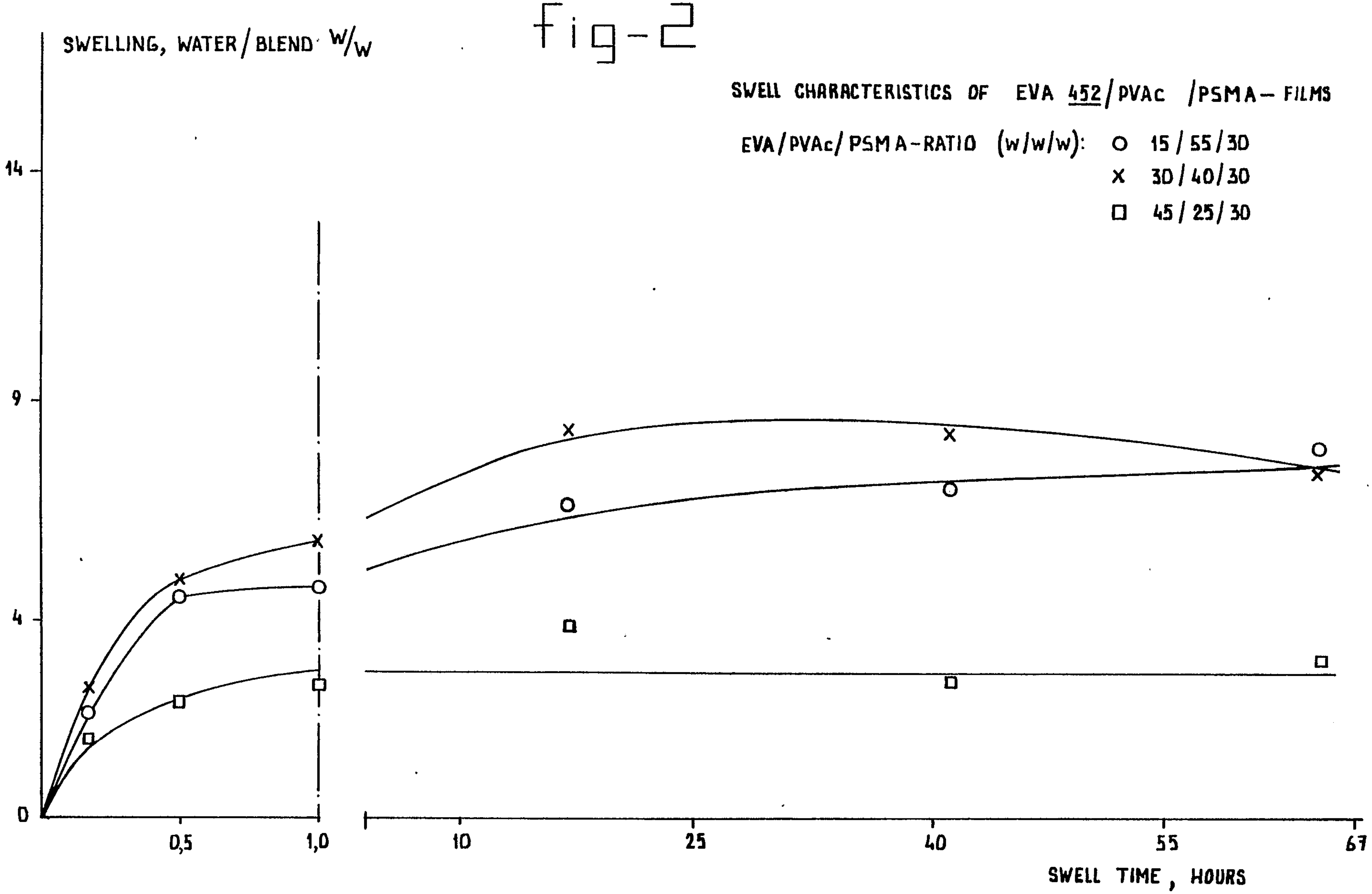
SWELLING, WATER/BLEND W/W
SWELL CHARACTERISTICS OF EVA 452/PVAc /PSMA- FILMS
EVA/PVAc/PSMA-RATIO (w/w/w): O 15/55/30
X 30/40/30
□ 45/25/30
14
9
4
0
0,5
1,0
10
25
40
55
67
SWELL TIME, HOURS

Fig-3

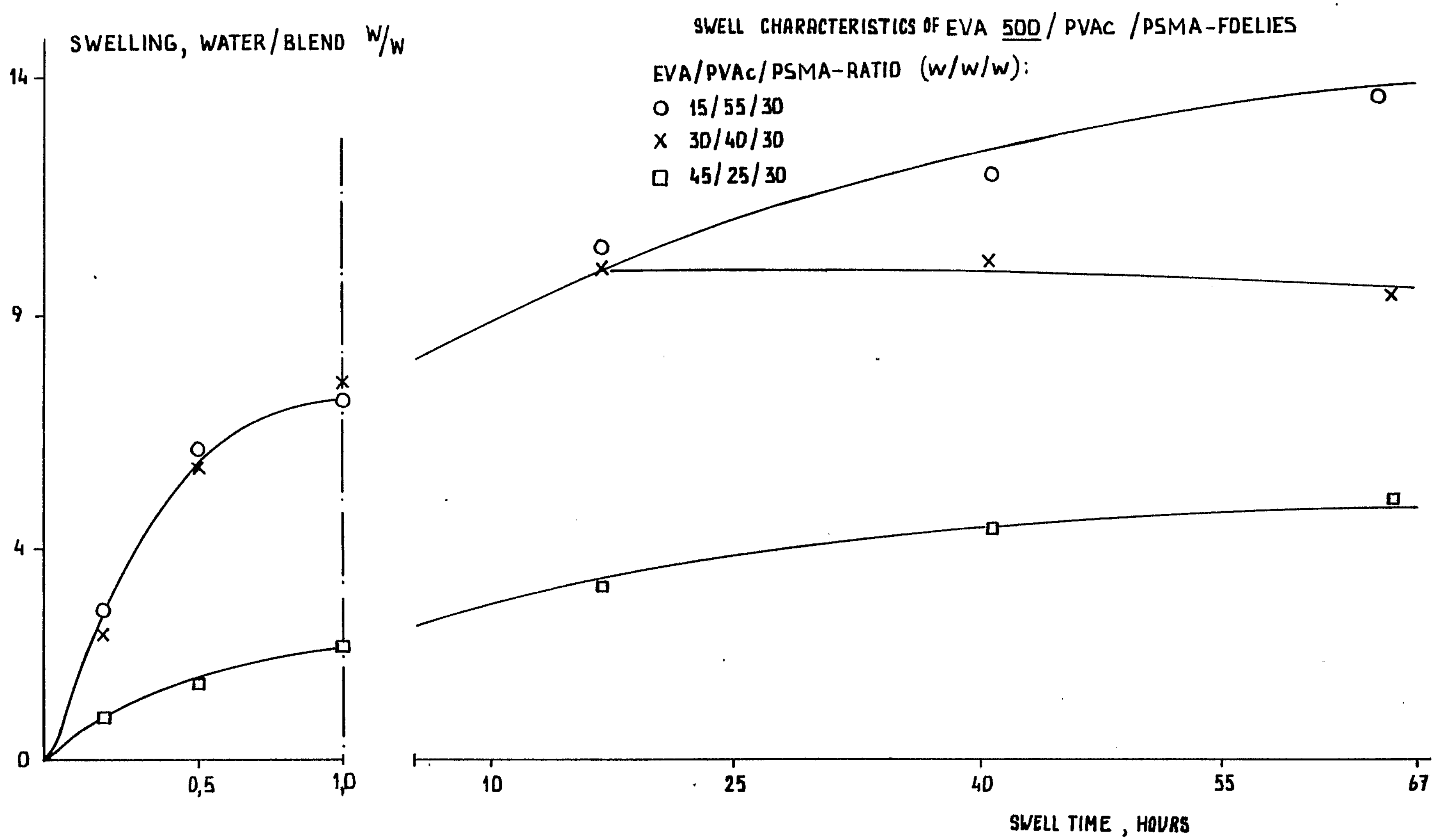
SWELL CHARACTERISTICS OF EVA 500 / PVAc / PSMA-FOELIES
EVA/PVAc/PSMA-RATIO (w/w/w):
O 15/55/30
X 30/40/30
□ 45/25/30
SWELLING, WATER/BLEND W/W
14
9
4
0
0,5
1,0
10
25
40
55
67
SWELL TIME , HOURS